# EUROPEAN PATENT APPLICATION

(11) **EP 4 299 667 A1**
(43) Date of publication of application: **03.01.2024**
(21) Application number: 22876978.2
(22) Date of filing: 30.09.2022
(51) Int. Cl.: C08L 23/12, C08L 53/00

(54) **THERMOPLASTIC RESIN COMPOSITION**

(30) Priority: 01.10.2021 KR 20210130755; 29.09.2022 KR 20220124447
(71) Applicant: LG Chem, Ltd., Yeoui-daero, Youngdungpo-gu Seoul 07336 (KR)
(72) Inventor: KIM, Yun Kon, Daejeon 34122 (KR); SHIN, Eun Ji, Daejeon 34122 (KR); SA, Seok Pil, Daejeon 34122 (KR); IM, Seul Ki, Daejeon 34122 (KR); LEE, Hyun Mo, Daejeon 34122 (KR); PARK, Ji Hyun, Daejeon 34122 (KR)
(74) Representative: Hoffmann Eitle
(86) International application number: PCT/KR2022/014837
(87) International publication number: WO 2023/055207

(57) **Abstract**

The present invention relates to a thermoplastic resin composition comprising polypropylene and a multi-block copolymer, and the thermoplastic resin composition according to the present invention exhibits excellent scratch resistance, and thus may be usefully used as a resin composition in the manufacturing of products requiring scratch resistance, such as automotive interior materials.

## Description

### TECHNICAL FIELD

This application claims the benefit of Korean Patent Application Nos. 10-2021-0130755, filed on October 1, 2021, and 10-2022-0124447, filed on September 29, 2022, in the Korean Intellectual Property Office, the disclosures of which are incorporated herein in their entirety by reference.

The present invention relates to a thermoplastic resin composition comprising a multi-block copolymer, and more particularly, to a thermoplastic resin composition comprising polypropylene, and a multi-block copolymer containing a polystyrene-based block and a polyolefin-based block.

### BACKGROUND ART

Recently, as emotional quality has become more important, the surface characteristics of automotive interior materials are considered as an important evaluation factor. Accordingly, in order to impart luxurious feel thereto, a method for injecting a either a thermosetting resin composed of polycarbonate and acrylonitrile-butadiene-styrene (ABS) and then bonding a skin material thereto has been used. However, There has been a problem in that However, there has been a problem in that the process is complicated and the unit price of a product is increased.

Accordingly, a polypropylene-based resin composition comprising polypropylene (PP) as a main component and an impact modifier and an inorganic filler has been utilized. Polypropylene has excellent rigidity and molding processability, and thus, is widely used as a material for automotive interior and exterior parts, but has weak impact strength, which is disadvantageous. In addition, when an external force is applied over a certain level, surface damage such as scratches occurs on the surface of the resin, which not only accelerates the damage of the material itself, but also results in the loss of the original function of the material.

Therefore, there is a demand for the development of automotive interior materials having excellent scratch resistance.

In this regard, the present inventors have confirmed that a resin composition, in which a block copolymer comprising a polystyrene-based block and a polyolefin-based block together is applied to polypropylene, exhibits excellent scratch resistance, and thus exhibit sustainable surface characteristics as an automotive interior material, and have completed the present invention.

### [Prior Art Document]

### [Patent Document]

(Patent Document 1) Korean Patent Laid-Open Publication No. 10-1657925

### DISCLOSURE OF THE INVENTION

### TECHNICAL PROBLEM

An aspect of the present invention provides a thermoplastic resin composition with excellent scratch resistance, which comprises polypropylene and a multi-block copolymer comprising a polystyrene-based block and a polyolefin-based block.

### TECHNICAL SOLUTION

According to an aspect of the present invention, there is provided a thermoplastic resin composition.
(1) The present invention provides a thermoplastic resin composition which is a resin composition comprising propylene and a multi-block copolymer, wherein the multi-block copolymer comprises a polystyrene-based block comprising an aromatic vinyl-based monomer-derived repeating unit and a polyolefin-based block comprising an ethylene-derived repeating unit and an alphaolefin-derived monomer-derived repeating unit, and the multi-block copolymer satisfies the following conditions when a storage modulus G' according to temperatures and a loss modulus G" according to temperatures as measured by a dynamic mechanical analysis method are plotted as a y-axis and an x-axis, respectively.
   a) a slope at 130°C is 2.00 to 4.00, and b) a slope at 190°C is 3.00 to 5.00.
(2) In (1) above, the present invention provides a thermoplastic resin composition comprising the polypropylene and the multi-block copolymer at a weight ratio of 1:0.11 to 1:9.
(3) In (1) or (2) above, the present invention provides a thermoplastic resin composition, wherein a brightness variation is 0.10 to 0.99, wherein the brightness variation is derived as follows using an Erichsen scratch tester.
   a) prepare a specimen of 100 x 100 x 1 mm of the resin composition by a hot press method;
   b) measure an initial brightness (Lᵢ) of the specimen;
   c) form scratches on the surface of the specimen at an interval of 2 mm with a force of 10 N;
   d) measure a brightness (L_{f}) of the specimen on which the scratches are formed; and
   e) calculate an amount of change between Lᵢ and L_{f}.
(4) In (3) above, the present invention provides a thermoplastic resin composition, wherein the bright variation is 0.10 to 0.50.
(5) In any one of (1) to (4) above, the present invention provides a thermoplastic resin composition, wherein the alpha-olefin is one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene, and 3,4-dimethyl-1-hexene.
(6) In any one of (1) to (5) above, the present invention provides a thermoplastic resin composition, wherein the multi-block copolymer further satisfies the condition in which the difference between the slope at 130°C and the slope at 190°C is 0.50 to 2.00.
(7) In any one of (1) to (6) above, the present invention provides a thermoplastic resin composition, wherein the multi-block copolymer has a slope at 130°C which is less than a slope at 190°C.
(8) In any one of (1) to (7) above, the present invention provides a thermoplastic resin composition, wherein the multi-block copolymer further satisfies a slope in the range of 2.00 to 5.00 in the range of 130°C to 250°C.
(9) In any one of (1) to (8) above, the present invention provides a thermoplastic resin composition, wherein multi-block copolymer further satisfies the condition in which the slope at 250°C is 3.00 to 4.80.
(10) In any one of (1) to (9) above, the present invention provides a thermoplastic resin composition, wherein the molecular weight distribution of the multi-block copolymer as measured from gel permeation chromatography (GPC) is 1.5 to 3.0.

### ADVANTAGEOUS EFFECTS

A thermoplastic resin composition provided in the present invention comprises polypropylene, and a block copolymer with excellent compatibility with the polypropylene due to a chain structure close to symmetry, so that the thermoplastic resin composition exhibits excellent scratch resistance, and may be usefully used as a resin composition in the manufacturing of products requiring scratch resistance, such as automotive interior materials.

### MODE FOR CARRYING OUT THE INVENTION

Hereinafter, the present invention will be described in more detail to facilitate understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present specification, the term "alkyl" refers to a hydrocarbon moiety of a linear chain or a branched chain.

In the present invention, the term "alkyl" means a hydrocarbon moiety of a linear chain or a branched chain.

In the present invention, the term "alkenyl" means an alkenyl group of a linear chain or a branched chain.

In the present invention, "aryl" preferably has 6 to 20 carbon atoms, and may specifically be phenyl, naphthyl, anthracenyl, pyridyl, dimethylanilinyl, anisolyl, and the like, but is not limited thereto.

In the present invention, "alkylaryl" means an aryl group substituted by the alkyl group above.

In the present invention, "arylalkyl" means an alkyl group substituted by the aryl group above.

In the present specification, "alkylsilyl" may be silyl substituted with alkyl having 1 to 20 carbon atoms, for example, trimethylsilyl or triethylsilyl.

In the present invention, "alkylamino" means an amino group substituted by the alkyl group above, for example, a dimethylamino group, a diethylamino group, and the like, but is not limited thereto.

In the present invention, unless otherwise stated, "hydrocarbyl" means a monovalent hydrocarbon group having 1 to 20 carbon atoms and consisting only of carbon and hydrogen, such as alkyl, aryl, alkenyl, alkynyl, cycloalkyl, alkylaryl or arylalkyl, regardless of the structure thereof.

In the present specification, the term "composition" comprises not only a reaction product and a decomposition product formed from materials of a corresponding composition, but also a mixture of materials comprising the corresponding composition.

In the present specification, the term "polymer" refers to a polymer compound prepared by polymerizing monomers, whether of the same or different kinds. Thus, the generic term "polymer" covers the term "homopolymer" which is commonly used to refer to a polymer prepared from only one kind of monomer and the term "interpolymer" as defined below.

In the present specification, the term "interpolymer" refers to a polymer prepared by polymerizing at least two different kinds of monomers.

In this specification, the number 0 following the decimal point "." may be omitted.

Hereinafter, the present invention will be described in detail.
(1) A thermoplastic resin according to the present invention is a resin composition comprising propylene and a multi-block copolymer, wherein the multi-block copolymer comprises a polystyrene-based block comprising a repeating unit derived from an aromatic vinyl-based monomer and a polyolefin-based block comprising a repeating unit derived from an ethylene and a repeating unit derived from an alpha-olefin-based monomer, and the multi-block copolymer satisfies the following conditions of a) a slope at 130°C is 2.00 to 4.00, and b) a slope at 190°C is 3.00 to 5.00 when a storage modulus G' according to temperatures and a loss modulus G" according to a temperatures as measured by a dynamic mechanical analysis method are plotted as a y-axis and an x-axis, respectively.

Hereinafter, each constituent component will be described in detail.

### (1) Polypropylene

In the resin composition according to an embodiment of the present invention, the polypropylene may specifically be a polypropylene homopolymer, or a copolymer of propylene and an alpha-olefin monomer, wherein the copolymer may be an alternating or random, or block copolymer.

The alpha-olefin-based monomer may specifically be a C2 to C12 or C2 to C8 aliphatic olefin. More specifically, examples thereof may be ethylene, propylene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene, 3,4-dimethyl-1-hexene, or the like, and any one thereof or a mixture of two or more thereof may be used.

More specifically, the polypropylene may be any one or a mixture of two or more selected from the group consisting of a polypropylene copolymer, a propylene-alpha-olefin copolymer, and a propylene-ethylene-alpha-olefin copolymer, wherein the copolymer may be a random or block copolymer.

In addition, the polypropylene may have a melt index (MI) of 0.5 g/10 min to 100 g/10 min measured at 230°C and a 2.16 kg load. Specifically, the melt index (MI) may be 1 g/10 min to 90 g/10 min. When the melt index of polypropylene is out of the above range, there is a possibility that a problem may occur during injection molding of the thermoplastic resin composition.

Specifically, in the thermoplastic resin composition according to an embodiment of the present invention, the polypropylene may be a copolymer having a melt index (MI) of 0.5 g/10 min to 100 g/10 min, specifically 1 g/10 min to 90 g/10 min, and more specifically 2 g/10 min to 50 g/10 min as measured at 230°C and a 2.16 kg load, and more specifically, may be a polypropylene-ethylene copolymer, a highly crystalline polypropylene (HCPP). When a copolymer having the physical properties as described above is comprised as polypropylene in the above content ranges, strength properties, room temperature strength properties in particular, may be improved.

The copolymer may be prepared to satisfy the above physical properties requirements using a typical polymer preparation reaction, or may be commercially obtained and used. A specific example thereof may comprise SEETEC^{™} M1600, a product of LG Chem, CB5230, a product of Korea Petrochemical Ind. Co., LTD, or the like.

In addition, in the thermoplastic resin composition according to an embodiment of the present invention, the polypropylene may specifically be one or more random propylene copolymers or block propylene copolymers which have a DSC melting point in the range of 120°C to 160°C and a melt flow rate (MFR) in the range of 5 g/10 min to 120 g/10 min as measured under the conditions of 230°C and a 2.16 kg load according to ASTM-D 1238, and the random propylene copolymer or block copolymer may be comprised in an amount of 10 wt% to 90 wt%, specifically 15 wt% to 60 wt%, more specifically 20 wt% to 40 wt% based on the total weight of the resin composition. When polypropylene having the above physical properties is comprised in the above-described content range, the mechanical strength of the thermoplastic resin composition such as hardness may be improved. The propylene copolymer may be prepared to satisfy the above physical properties requirements using a typical polymer preparation reaction, or may be commercially obtained and used. A specific example thereof may comprise Braskem^{™} PP R7021-50RNA of Braskem America Inc., Formolene^{™} 7320A of Formosa Plastics Corporation of USA, and the like.

### (2) Multi-block copolymer

The resin composition of the present invention comprises a polystyrene-based block having a repeating unit derived from an aromatic vinyl-based monomer and a polyolefin-based block having a repeating unit derived from an ethylene and a repeating unit derived from an alpha-olefin-based monomer, wherein the multi-block copolymer satisfies the following conditions of a) a slope at 130°C is 2.00 to 4.00, and b) a slope at 190°C is 3.00 to 5.00 when a storage modulus G' according to temperatures and a loss modulus G" according to a temperatures as measured by a dynamic mechanical analysis method are plotted as a y-axis and an x-axis, respectively.

The multi-block copolymer of the present invention is prepared using a specific transition metal compound of a novel structure as a catalyst as to be described later, and has a high weight average molecular weight value, which is an important factor in determining the physical properties of a copolymer, and the chain structure of the copolymer is close to symmetry. The multi-block copolymer of the present invention comprises a polystyrene-based block comprising a repeating unit derived from an aromatic vinyl-based monomer and a polyolefin-based block comprising a repeating unit derived from an ethylene and a repeating unit derived from an alpha-olefin-based monomer, wherein the chain structure of the copolymer is close to symmetry, and accordingly, the multi-block copolymer has excellent compatibility, and also exhibits excellent physical properties since physical cross-linking of a polystyrene-based block region is homogeneously formed.

The multi-block copolymer comprised in the resin composition of the present invention is characterized in that a G'-G" plot satisfies the following conditions, wherein the G'-G" plot obtained by respectively plotting a storage modulus G' according to temperatures and a loss modulus G" according to temperatures as measured by a dynamic mechanical analysis method as a y-axis and an x-axis.

In one example of the present invention, in the multi-block copolymer, the G'-G" plot may satisfy a) a slope at 130°C is 2.00 to 4.00, and b) a slope at 190°C is 3.00 to 5.00, and also a slope in of the range of 2.00 to 5.00 in the range of 130°C to 250°C.

In one example of the present invention, a) the slope at 130°C of the G'-G" plot may specifically be 2.20 or greater, 2.40 or greater, 2.50 or greater, 3.80 or less, 3.60 or less, or 3.40 or less, and more specifically, may be 2.60 to 3.30.

In addition, in one example of the present invention, b) the slope at 190°C of the G'-G" plot may specifically be 3.00 or greater, 3.05 or greater, 3.10 or greater, 3.12 or greater, 4.80 or less, 4.70 or less, or 4.60 or less, and more specifically, may be 3.12 to 4.50.

In addition, in one example of the present invention, in the range of 130°C to 250°C, the G'-G" plot may specifically satisfy a slope in the range of 2.20 or greater, 2.40 or greater, 2.50 or greater, 4.80 or less, 4.70 or less, or 4.60 or less, and more specifically 2.60 to 4.50.

The multi-block copolymer may have a slope at 130°C less than a slope at 190°C, and also, the multi-block copolymer may further satisfy the condition in which the difference between the slope at 130°C and the slope at 190°C is 0.50 to 2.00. In one example of the present invention, c) the difference between the slope at 190°C and the slope at 190°C may specifically difference be 0.50 or greater, 0.52 or greater, 0.55 or greater, 0.57 or greater, 1.90 or less, 1.80 or less, or 1.70 or less, and more specifically, may be 0.55 to 1.65.

In addition, in one example of the present invention, b) the slope at 250°C of the G'-G" plot may be 3.00 to 4.80, specifically, 3.00 or greater, 3.05 or greater, 3.10 or greater, 3.13 or greater, or 3.15 to 4.80, 4.70 or less, 4.60 or less, 4.5 or less, or 4.40 or less, and more specifically, may be 3.15 to 4.50.

When a storage modulus G' according to temperatures and a loss modulus G" according to temperatures are obtained by a dynamic mechanical analysis method for a multi-block copolymer, and then the storage modulus G' and the loss modulus G" are respectively plotted as a y-axis and an x-axis to draw a G'-G" plot, an order-disorder temperature T_{ODT} may be obtained using the G'-G" plot. At temperatures equal to or lower than the order-disorder temperature (T_{ODT}), a copolymer exhibits an ordered state, and at temperatures equal to or higher than the order-disorder temperature (T_{ODT}), the copolymer exhibits a disordered state, and at the temperatures equal to or lower than the order-disorder temperature (T_{ODT}), a microdomain of the copolymer changes according to temperature, so that there is a change in the slope of the G'-G" plot. On the other hand, at the temperatures equal to or higher than the order-disorder temperature (T_{ODT}), there is no change in the slope of the G'-G" plot even with a change in temperature.

The multi-block copolymer comprised in the resin composition of the present invention satisfies the slope conditions according to temperatures of a G'-G" plot having the above properties, and the multi-block copolymer itself may exhibit improved physical properties such as excellent elongation and tensile strength as well as a proper level of 300% modulus, etc.

The weight average molecular weight (MW) of the multi-block copolymer is 100,000 g/mol to 300,000 g/mol, and specifically, may be 105,000 g/mol or greater, 300,000 g/mol or less, or 250,000 g/mol or less, and more specifically, may be 120,000 g/mol to 200,000 g/mol.

The molecular weight distribution (PDI) of the multi-block copolymer may be 1.5 to 3.0, and specifically, may be 1.55 or greater, 1.6 or greater, 1.65 to 2.8, 2.6 or less, 2.5 or less, 2.3 or less, or 2.0 or less, and more specifically, may be 1.65 to 2.0.

The molecular weight distribution is calculated from the ratio of (weight average molecular weight)/(number average molecular weight), and the weight average molecular weight and number average molecular weight are polystyrene conversion molecular weights analyzed by gel permeation chromatography (GPC).

The multi-block copolymer may further satisfy the molecular weight distribution (PDI) in addition to the slope conditions of the G'-G" plot.

The multi-block copolymer comprised in the resin composition of the present invention comprises a polystyrene-based block comprising a repeating unit derived from an aromatic vinyl-based monomer, and a polyolefin-based block comprising a repeating unit derived from an ethylene and a repeating unit derived from an alpha-olefin-based monomer, wherein the polyolefin-based block necessarily comprises a branched chain (branch) from a main chain, but comprises fewer branches than a typical polyolefin-polystyrene-based block copolymer, specifically, a styrene-ethylene-butylene-styrene copolymer (SEBS) and a styrene-ethylene-propylene-styrene copolymer (SEPS) prepared by two processes of typical anionic polymerization and hydrogenation reaction, while exhibiting excellent physical properties.

The multi-block copolymer is a polyolefin-polystyrene-based multi-block copolymer which comprises a polystyrene-based block comprising a repeating unit derived from an aromatic vinyl-based monomer and a polyolefin-based block comprising a repeating unit derived from an ethylene and a repeating unit derived from an alpha-olefin-based monomer, wherein the alpha-olefin-based monomer may be a C5 to C20 alpha-olefin, specifically, a C5 to C14 alpha-olefin. The alpha-olefin-based monomer may be one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene, and 3,4-dimethyl-1-hexene, and more specifically, may be 1-hexene.

### Resin composition

The resin composition of the present invention may comprise the polypropylene and the aforementioned multi-block copolymer at a weight ratio of 1:0.11 to 1:9, and specifically, may comprise the polypropylene and the multi-block copolymer at a weight ratio of 1:0.11 to 1:4, 1:0.11 to 1:3, 1:0.11 to 1:2.4, 1:0.11 to 1:1.5, 1:0.11 to 1:1, 1:0.17 to 1:1.5, or 1:0.17 to 1:1,and more specifically, 1:0.17 to 1:0.82.

When the content of the multi-block copolymer comprised in the resin composition is too small, the impact strength may be degraded and scratch resistance may be degraded, and when the content the multi-block copolymer is excessive, the fluidity of the resin composition may be degraded. When the weight ratio of the polypropylene and the multi-block copolymer satisfies the above weight ratio, improved scratch resistance and impact strength may be exhibited while high fluidity properties are maintained.

When the resin composition is commercialized, damage such as scratches on the surface causes changes in touch, color feel, and the like, thereby reducing the likability. Since the scratches on the surface cause a change in brightness, scratch resistance as a physical property may be evaluated by measuring bright variance.

The resin composition according to one example of the present invention may have a brightness variation (ΔL) of 0.10 to 0.99, and the brightness variation (ΔL) may specifically be 0.10 or greater, 0.11 or greater, 0.12 or greater, 0.13 or greater, 0.14 to 0.98, 0.95 or less, 0.90 or less, 0.80 or less, 0.70 or less, 0.60 or less, 0.55 or less, 0.50 or less, 0.49 or less, or 0.48 or less, and more specifically, may be 0.14 to 0.48.

Specifically, the brightness variation (ΔL) may be derived through a method of sequentially performing the following processes a) to e) using an Erichsen scratch tester.
a) prepare a specimen of 100 x 100 x 1 mm of the resin composition by a hot press method,
b) measure an initial brightness (Lᵢ) of the specimen,
c) form scratches on the surface of the specimen at an interval of 2 mm with a force of 10 N,
d) measure a brightness (L_{f}) of the specimen on which the scratches are formed, and
e) calculate an amount of change between Lᵢ and L_{f}.

The resin composition according to one example of the present invention has excellent scratch resistance, and since the amount of change in surface brightness that may be derived from the occurrence of surface scratches is small due to the excellent scratch resistance, the above brightness variation (△L) ranges may be satisfied.

Meanwhile, the resin composition according to an embodiment of the present invention may selectively further comprise an inorganic filler together with the polypropylene and the multi-block copolymer in order to improve the mechanical properties of the resin composition.

The inorganic filler may be a powder-type filler, a flake-type filler, a fibrous filler, or a balloon-type filler, and any one thereof or a mixture of two or more thereof may be used. Specifically, the powder-type filler may be a natural silicic acid or silicate such as fine powder talc, kaolinite, calcined clay, or sericite, a carbonate such as a precipitated calcium carbonate, a heavy calcium carbonate or a magnesium carbonate, a hydroxide such as an aluminum hydroxide or a magnesium hydroxide, an oxide such as a zinc oxide, a magnesium oxide, or a titanium oxide, a synthetic silicic acid or silicate such as a hydrous calcium silicate, a hydrous aluminum silicate, a hydrous silicic acid or an silicic anhydride, and silicon carbide, and the like. In addition, the flake-type filler may be mica, and the like. The fibrous filler may be a basic sulfuric acid magnesium whisker, a calcium titanate whisker, a boric acid aluminum whisker, sepiolite, processed mineral fiber (PMF), potassium titanate, or the like. In addition, the balloon-type filler may be a glass balloon and the like. Among the above, the inorganic filler may be talc.

In addition, the inorganic filler may be surface-treated to improve the strength properties and molding processability of the thermoplastic resin composition.

Specifically, the inorganic filler may be physically or chemically surface-treated using a surface treatment agent such as a silane coupling agent, a higher fatty acid, a fatty acid metal salt, an unsaturated organic acid, an organic titanate, a resin acid, or polyethylene glycol.

In addition, the average particle diameter (D₅₀) of the inorganic filler may be 1 um to 20 um, specifically 3 um to 15 µm, more specifically 5 pm to 10 um. When the average particle diameter of the inorganic filler is too small, it is difficult to achieve uniform dispersion when mixed with the polypropylene and the multi-block copolymer due to the aggregation between inorganic filler particles, and as a result, the effect of improving the mechanical properties of the resin composition may be insignificant. In addition, when the average particle diameter of the inorganic filler is excessive, there is a risk of physical properties degradation due to the degradation in the dispersibility of the inorganic filler itself.

In the present invention, the average particle diameter (D₅₀) of the inorganic filler may be defined as a particle diameter at 50% of a particle diameter distribution. In the present invention, the average particle diameter (D₅₀) of the inorganic filler may be measured, for example, by electron microscopy using a scanning electron microscope (SEM) or a field emission scanning electron microscopy (FE-SEM), or by a laser diffraction method. Specifically, when measured by a laser diffraction method, inorganic filler particles may be dispersed in a dispersion medium, and then introduced into a commercially available laser diffraction particle size measuring device (e.g., Microtrac MT 3000) to measure the average particle diameter (D₅₀) at 50% of a particle size distribution in the measuring device.

The above-described inorganic filler may be comprised in an amount of 0.1 parts by weight to 40 parts by weight based on 100 parts by weight of the resin composition. When the content of the inorganic filler in the resin composition is less than 0.1 parts by weight based on 100 parts by weight of the resin composition, the improvement effect according to the inclusion of the inorganic filler is insignificant, and when greater than 40 parts by weight, the processability of the resin composition may be degraded. More specifically, the inorganic filler may be comprised in an amount of 0.1 parts by weight to 20 parts by weight based on the total weight of the resin composition.

The thermoplastic either a thermosetting resin according to an embodiment of the present invention which satisfies the above-described composition and content conditions may be prepared by adding polypropylene and selectively an inorganic filler to a multi-block copolymer, followed by mixing and performing heat treatment. At this time, the type and the content of the polypropylene are the same as described above.

The mixing process may be performed according to a typical method. Specifically, the mixing may be performed using a super mixer or a ribbon mixer.

In addition, as required in the mixing process, an additive such as an antioxidant, a thermoplastic stabilizer, a UV stabilizer, an antistatic agent, and the like may be further comprised, and in order to improve paintability, an additive having a small amount of adhesive resin or polar group may be selectively further used within an appropriate content range.

In addition, the heat treatment process may be performed at a temperature above the melting point of polypropylene and 210°C or below. The heat treatment process may be performed using various blending processing devices such as a twin-screw extruder, a single-screw extruder, a roll-mill, a kneader, or a banbury mixer.

The resin composition according to an embodiment of the present invention exhibits excellent processability and excellent scratch resistance at the same time, and thus may be usefully used for blow molding, extrusion molding or injection molding as an automotive material such as automotive parts, automotive interior materials, and the like.

According to another embodiment of the present invention, there are provided an automotive part and an automotive interior material, which are molded bodies produced using a resin composition satisfying the above physical properties requirements.

The molded body may specifically be a blow molding molded body, an inflation molded body, a cast molded body, an extrusion laminate molded body, an extrusion molded body, a foam molded body, an injection molded body, a sheet, a film , a fiber, a monofilament, a non-woven fabric, or the like.

### Preparation method of multi-block copolymer

A multi-block copolymer comprised in the resin composition of the present invention may be prepared by a method comprising steps of (S1) preparing a polyolefin-based block by reacting ethylene and an alpha-olefin-based monomer using an organozinc compound as a chain transfer agent in the presence of a catalyst composition comprising a transition metal compound, and (S2) preparing a multi-block copolymer by reacting an aromatic vinyl-based monomer with the polyolefin-based block in the presence of an alkyl lithium compound and an amine-based compound.

### Step (S1)

Step (S1) is a step of preparing a polyolefin-based block by reacting ethylene and an alpha-olefin-based monomer using an organozinc compound as a chain transfer agent in the presence of a catalyst composition comprising a transition metal compound.

According to an embodiment of the present invention, the transition metal catalyst is a catalyst for growing an olefin-based polymer through coordinative chain transfer polymerization, and may be a catalyst composition comprising a main catalyst, which is a transition metal, and a co-catalyst.

In the present invention, the transition metal compound may be a compound represented by Formula 1 below.

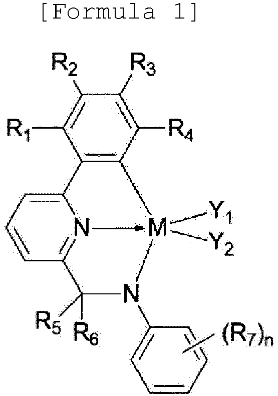

In Formula 1 above,
M is Ti, Zr, or Hf,
R₁ to R₄ are each independently hydrogen, a substituted or unsubstituted C1 to C20 alkyl group, a substituted or unsubstituted C3 to C20 cycloalkyl group, or a substituted or unsubstituted C6 to C20 aryl group, wherein two or more adjacent ones thereof may be connected to each other and form a ring,
R₅ and R₆ are each independently hydrogen, a substituted or unsubstituted C1 to C20 alkyl group, a substituted or unsubstituted C3 to C20 cycloalkyl group, or a substituted or unsubstituted C6 to C20 aryl group, wherein the substitution is performed by a C1 to C12 alkyl group,
R₇ is each independently a substituted or unsubstituted C4 to C20 alkyl group, a substituted or unsubstituted C4 to C20 cycloalkyl group, or a substituted or unsubstituted C6 to C20 aryl group,
n is 1 to 5, and
Y₁ and Y₂ are each independently a halogen group, a C1 to C20 alkyl group, a C2 to C20 alkenyl group, a C2 to C20 alkynyl group, a C3 to C20 cycloalkyl group, a C6 to C20 aryl group, a C7 to C20 alkylaryl group, a C7 to C20 arylalkyl group, a C5 to C20 heteroaryl group, a C1 to C20 alkoxy group, a substituted or unsubstituted C5 to C20 aryloxy group, a C1 to C20 alkylamino group, a C5 to C20 arylamino group, a C1 to C20 alkylthio group, a C5 to C20 arylthio group, a C1 to C20 alkylsilyl group, a C5 to C20 arylsilyl group, a hydroxyl group, an amino group, a thio group, a silyl group, a cyano group, or a nitro group.

Specifically, in Formula 1 above, M may be Hf.

In addition, specifically, in Formula 1 above, R₁ to R₄ are each independently hydrogen, or a substituted or unsubstituted C1 to C20 alkyl group, wherein two or more adjacent ones thereof may be connected to each other and form a ring. Alternatively, R₁ and R₂ are each independently a C1 to C20 alkyl group, which are connected to each other and form a C5 to C20 aromatic ring, and R₃ and R₄ may be hydrogen.

In addition, specifically, in Formula 1 above, R₅ and R₆ are each independently hydrogen, or a substituted or unsubstituted C6 to C20 an aryl group, wherein the substitution may performed by a C1 to C6 alkyl group.

In addition, specifically, in Formula 1 above, R₇ may each independently be a substituted or unsubstituted C4 to C20 alkyl group, a substituted or unsubstituted C4 to C20 cycloalkyl group, or a substituted or unsubstituted C6 to C20 aryl group.

Specifically, in Formula 1 above, n may be 1 to 3, preferably 2.

Specifically, in Formula 1 above, X₁ and X₂ may each independently be a C1 to C20 alkyl group.

More specifically, the transition metal compound represented by Formula 1 above may be a compound represented by Formula 1a below.

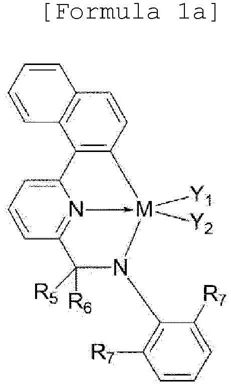

In Formula 1a above,
M, R₅ to R₇, and Y₁ and Y₂ are the same as defined above.

The transition metal compound represented by Formula 1 above may specifically be selected from the following compounds, but is not limited thereto. All transition metal compounds corresponding to Formula 1 are comprised in the present invention.

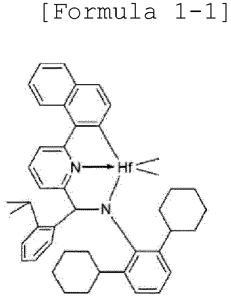

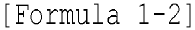

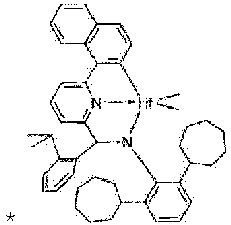

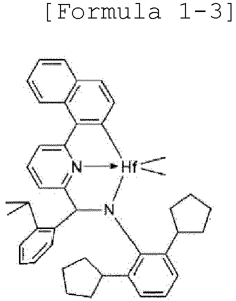

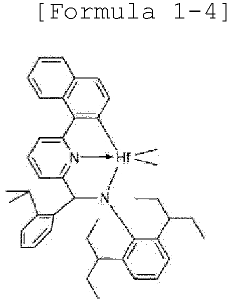

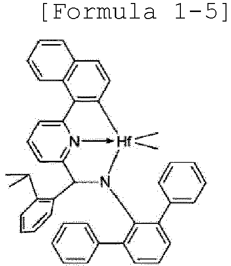

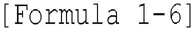

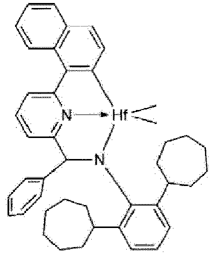

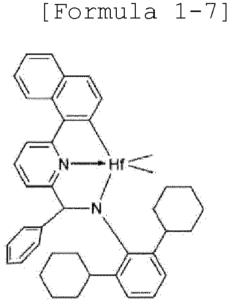

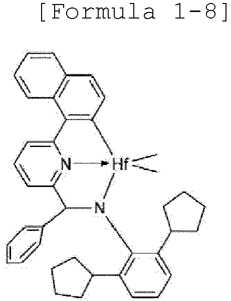

In addition, the present invention provides a ligand compound represented by Formula 2 below.

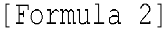

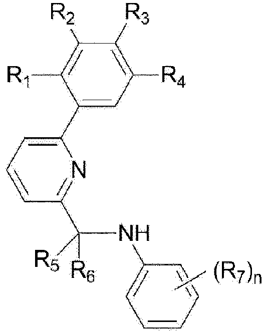

In Formula 2 above,
R₁ to R₄ are each independently a substituted or unsubstituted C1 to C20 alkyl group, a substituted or unsubstituted C3 to C20 cycloalkyl group, or a substituted or unsubstituted C6 to C20 aryl group, wherein two or more adjacent ones thereof may be connected to each other and form a ring,
R₅ and R₆ are each independently hydrogen, a substituted or unsubstituted C1 to C20 alkyl group, a substituted or unsubstituted C3 to C20 cycloalkyl group, or a substituted or unsubstituted C6 to C20 aryl group, wherein the substitution is performed by a C1 to C12 alkyl group,
R₇ is each independently a substituted or unsubstituted C4 to C20 alkyl group, a substituted or unsubstituted C4 to C20 cycloalkyl group, or a substituted or unsubstituted C6 to C20 aryl group, and
n is 1 to 5.

That is, the transition metal compound of the present invention may be prepared by comprising a step of reacting a ligand compound represented by Formula 2 below and a compound represented by Formula 3 below.

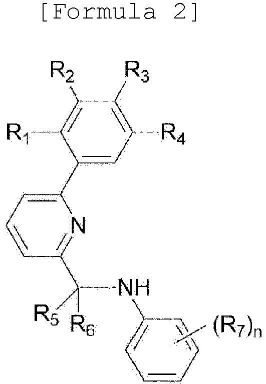

[Formula 3] M(Y₁Y₂)₂

In the above formulas,
R₁ to R₇, M, and Y₁ and Y₂ are the same as defined above.

Meanwhile, when preparing the transition metal compound represented by Formula 1 of the present invention, the reaction may be performed by the following process.

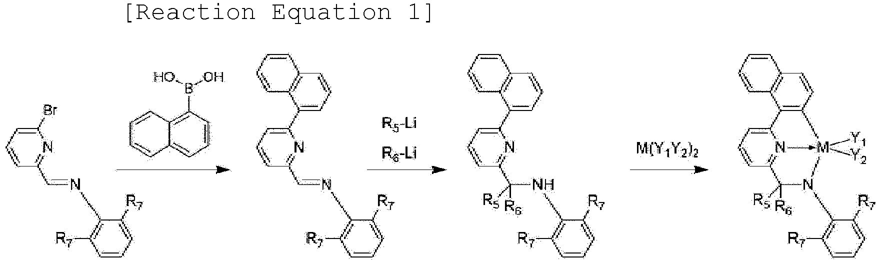

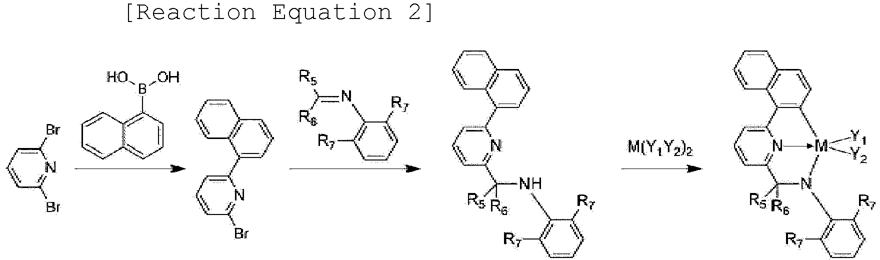

In the present invention, the organozinc compound is a material used as a chain transfer agent to induce chain transfer during the preparation in a polymerization reaction such that a copolymer is prepared, wherein the chain transfer agent may be a chain transfer agent for preparing a block copolymer by coordinative chain transfer polymerization.

In the present invention, the organozinc compound is a material used as a chain transfer agent to induce chain transfer during the preparation in a polymerization reaction such that a copolymer is prepared, wherein the chain transfer agent may be a chain transfer agent for preparing a block copolymer by coordinative chain transfer polymerization.

In one example of the present invention, the chain transfer agent may comprise an organozinc compound represented by Formula 5 below, and specifically, the chain transfer agent may comprise 96 mol% or greater of the organozinc compound represented by Formula 5 below, and preferably the chain transfer agent may not comprise any side reaction products in addition to the organozinc compound represented by Formula 5 below.

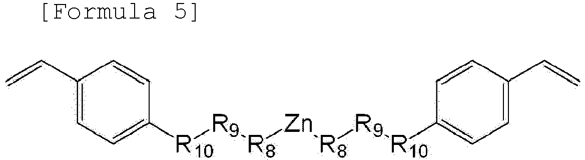

In Formula 5 above,
R₈ and R₁₀ may each independently be a single bond or a C1 to C10 alkylene group, R₉ may be a C1 to C10 alkylene group or -SiR₁₁R₁₂-, and R₁₁ and R₁₂ may each be independently a C1 to C10 alkyl group.

In addition, according to an embodiment of the present invention, in Formula 5 above, R₈ and R₁₀ may each independently be a single bond or a C1 to C10 alkylene group, R₉ may be a C1 to C10 alkylene group or -SiR₁₁R₁₂-, and R₁₁ and R₁₂ may each independently be a C1 to C10 alkyl group.

According to an embodiment of the present invention, the organozinc compound represented by Formula 5 above may be one selected from the group consisting of organozinc compounds represented by Formulas 5-1 to 5-4, and preferably any one of Formulas 5-3 and 5-4.

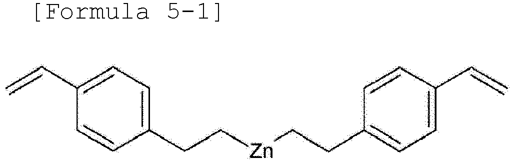

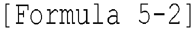

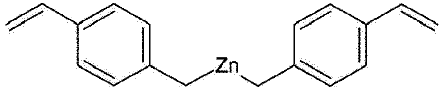

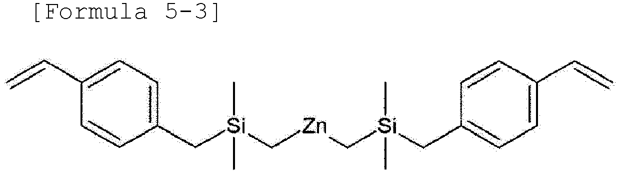

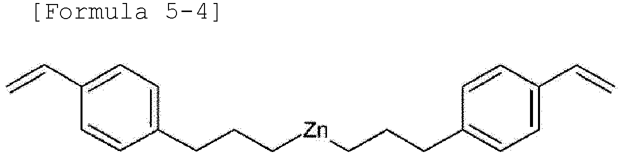

According to an embodiment of the present invention, the chain transfer agent may comprise 97 mol% or greater of the organozinc compound Formula 5 above, more preferably 98 mol% or greater, or 99 mol% or greater, and most preferably, may not comprise any side reaction products in addition to the organozinc compound. This means that the chain transfer agent does not comprise any side reaction products such as a dimer in addition to the organozinc compound represented by Formula 5, as well as impurities containing chlorine or magnesium. That is, the chain transfer agent may comprise only the organozinc compound represented by Formula 5 above.

When ethylene and an alpha-olefin-based monomer are reacted using the organozinc compound represented by Formula 5 above as a chain transfer agent in the presence of a catalyst composition comprising a transition metal compound, the ethylene and the alpha-olefin-based monomer are inserted between zinc (Zn) and R₁₀ of the organozinc compound, so that polymerization may be performed. In one example of the method for preparing a multi-block copolymer of the present invention, when a polyolefin-based block is prepared by reacting ethylene and an alpha-olefin-based monomer using the compound of Formula 4 above as the organozinc compound, an olefin-based polymer block intermediate is prepared, and an example of the olefin-based polymer block intermediate may be represented by Formula 6 below.

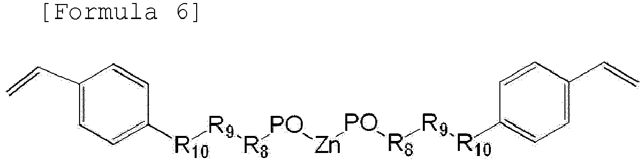

In Formula 6 above, R₈ and R₁₀ may each independently be a single bond or a C1 to C10 alkylene group, R₉ may be a C1 to C10 alkylene group or -SiR₁₁R₁₂-, R₁₁ and R₁₂ may each independently be a C1 to C10 alkyl group, and PO may be an olefin-based polymer block.

According to an embodiment of the present invention, the organozinc compound may be prepared by a preparation method comprising steps of preparing a Grignard reagent containing a styrene moiety, and reacting the prepared Grignard reagent with a zinc compound to prepare an organozinc compound represented by Formula 5 above, and the organozinc compound may be alkyl zinc alkoxide.

According to an embodiment of the present invention, the organozinc compound represented by Formula 5 above prepared according to the preparation method of an organozinc compound is synthesized as a single compound, and thus does not comprise any side reaction products such as a dimer, and furthermore, does not comprise impurities containing chlorine, which may act as a catalytic poison, such as organic zinc chloride (R-Zn-Cl). In addition, when an organozinc compound represented by Formula 5 above is prepared according to the preparation method of an organozinc compound, the organozinc compound is synthesized as a single compound, so that there is an effect in that synthesis reproducibility is excellent. Meanwhile, when preparing an organozinc compound, in order not to comprise side reaction products and impurities as in the present invention, it may be important to select a Grignard reagent containing a styrene moiety and a zinc compound.

According to an embodiment of the present invention, the Grignard reagent containing a styrene moiety may be represented by Formula 7 below.

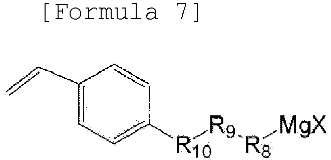

In Formula 7 above, R₈ and R₁₀ may each independently be a single bond or a C1 to C10 alkylene group, R₉ may be a C1 to C10 alkylene group or -SiR₁₁R₁₂-, R₁₁ and R₁₂ may each independently be a C1 to C10 alkyl group, and X may be a halogen group.

In addition, according to an embodiment of the present invention, in Formula 7 above, R₈ and R₁₀ may each independently be a single bond or a C1 to C10 alkylene group, R₉ may be a C1 to C10 alkylene group or -SiR₁₁R₁₂-, and R₁₁ and R₁₂ may each independently be a C1 to C10 alkyl group

According to an embodiment of the present invention, the Grignard reagent containing a styrene moiety and represented by Formula 7 above may be one selected from the group consisting of Grignard reagents each containing a styrene moiety represented by Formulas 7-1 to 7-4 below.

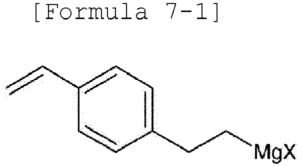

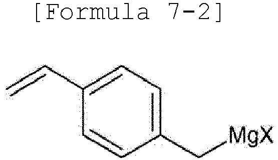

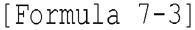

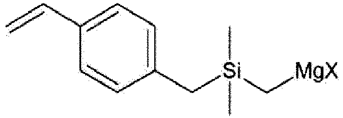

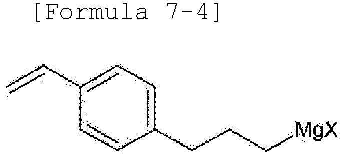

According to an embodiment of the present invention, the Grignard reagent containing a styrene moiety and represented by Formula 7 above may be prepared through a reaction between a halide in which halide (-X) is substituted for R₈ and magnesium, specifically, magnesium powder or a magnesium metal.

According to an embodiment of the present invention, the Grignard reagent containing a styrene moiety and represented by Formula 7 above may be prepared through a reaction between a compound represented by Formula 8 below and magnesium, specifically, magnesium powder or a magnesium metal.

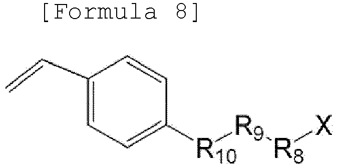

In Formula 8 above, R₈ and R₁₀ may each independently be a single bond or a C1 to C10 alkylene group, R₉ may be a C1 to C10 alkylene group or -SiR₁₁R₁₂-, R₁₁ and R₁₂ may each independently be a C1 to C10 alkyl group, and X may be a halogen group.

According to an embodiment of the present invention, in Formula 8 above, R₈ and R₁₀ may each independently be a single bond or a C1 to C3 alkylene group, R₉ may be a C1 to C3 alkylene group or -SiR₁₁R₁₂-, R₁₁ and R₁₂ may each independently be a C1 to C3 alkyl group, and X may be a halogen group.

In addition, according to an embodiment of the present invention, in Formula 8 above, R₈ and R₁₀ may each independently be a single bond or a C1 alkylene group, R₉ may be a C1 alkylene group or -SiR₁₁R₁₂-, R₁₁ and R₁₂ may each independently be a C1 alkyl group, and X may be one halogen group selected from the group consisting of Cl, Br, and I.

According to an embodiment of the present invention, a compound represented by Formula 8 above may be one selected from the group consisting of compounds represented by Formulas 8-1 to 8-4 below.

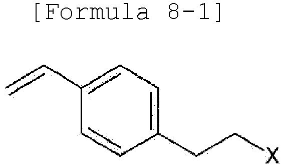

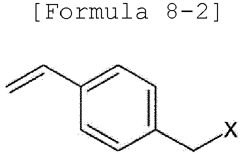

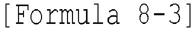

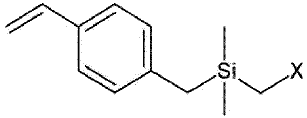

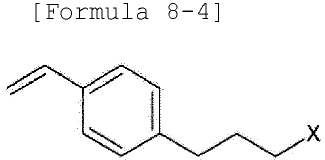

According to an embodiment of the present invention, when preparing the Grignard reagent containing a styrene moiety and represented by Formula 7 above, the reaction between the compound represented by Formula 8 above and the magnesium powder or magnesium metal may be performed at an excessive mole percent of magnesium powder or magnesium metal to 1 mole of the compound represented by the Formula 8 above based on a mole percent, that is, at a mole percent of greater than 1 mole, and in this case, 50 mol% or greater, 60 mol% or greater, 70 mol% or greater, 80 mol% or greater, 90 mol% or greater, 95 mol% or greater, or 99 mol% or greater of the compound represented by Formula 8 above may be converted into a Grignard reagent containing a styrene moiety.

According to an embodiment of the present invention, the reaction between the compound represented by Formula 8 above and the magnesium powder or magnesium metal may be performed at a molar ratio of greater than 1:1 to 1:10, greater than 1:1 to 1:5, greater than 1:1 to 1:2, or 1:1.01 to 1:1.60 based on the molar ratio, and within this range, the conversion rate to the Grignard reagent containing a styrene moiety and represented by Formula 7 above is high, while the content of residual magnesium after the reaction is minimized to facilitate the removal of residual magnesium powder or magnesium metal.

According to an embodiment of the present invention, when preparing an organozinc compound, the zinc compound is required to be a zinc compound capable of inducing substitution of two organic groups of the same type with zinc based on zinc. Therefore, zinc chloride (ZnCl₂) may be easily considered, but when zinc chloride is used as a zinc compound, there is a problem in that impurities (e.g., alkyl zinc chloride) containing chlorine, which may act as a catalytic poison, remain. Therefore, in the present invention, alkyl zinc alkoxide is used as the zinc compound.

According to an embodiment of the present invention, the alkyl group of the alkyl zinc alkoxide may be a C1 to C10 alkyl group, a C1 to C5 alkyl group, a C1 to C3 alkyl group, or an ethyl group, and the alkoxide group may be a C1 to C10 alkoxide group, a C1 to C5 alkoxide group, a C1 to C3 alkoxide group, or a methoxide group. As a specific example, the zinc compound may be ethyl zinc methoxide.

According to an embodiment of the present invention, the alkyl zinc alkoxide may be prepared from dialkyl zinc. As a specific example, the alkyl zinc alkoxide may be prepared by reacting dialkyl zinc with alcohol in-situ. At this time, the alkyl group of the dialkyl zinc may be the same as the alkyl group of the alkyl zinc alkoxide described above, and the alcohol may be an alcohol in which hydrogen is bonded to the alkoxide group of the alkyl zinc alkoxide described above.

According to an embodiment of the present invention, when the alkyl zinc alkoxide is used as the zinc compound, during the reaction of the Grignard reagent and the zinc compound, a magnesium halide alkoxide is generated, which is an insoluble salt that is easily filtered, so that it is possible to prevent impurities from remaining.

According to an embodiment of the present invention, the reaction between the Grignard reagent and the zinc compound may be performed at a molar ratio of 10:1 to 1:10, 5:1 to 1:5, 3:1 to 1:3, 2:1 to 1:2, 1.5:1 to 1:1.5, or 1:1 based on the molar ratio, and within this range, the organozinc compound is synthesized as a single compound, and thus does not comprise any side reaction products such as a dimer, and does not comprise impurities containing chlorine, which may act as a catalytic poison, and has an effect of easily removing impurities containing magnesium, which may act as a catalytic poison.

According to an embodiment of the present invention, all the steps and all the reaction of the preparation method of the zinc compound may be performed in an organic solvent, and the reaction temperature and reaction pressure may be adjusted according to the purpose of increasing yield and purity.

The preparation method of the zinc compound according to an embodiment of the present invention replaces a borane-based compound containing a typical styrene moiety with a Grignard reagent containing a styrene moiety, and replaces alkyl zinc or zinc chloride with alkyl zinc alkoxide, so that a catalytic poison may be completely removed.

In addition, through the improvement of the above method, unlike the prior art in which a product is obtained as a mixture of a dimer, a trimer, and a zinc compound with saturated ends, a compound in the form of a monomer with fully preserved end vinyl may be obtained as a single compound, so that not only the storage stability of a zinc compound is improved, but also the physical properties of a final compound are improved, and it is possible to achieve an effect of greatly reducing the production amount of diblock copolymers rather than a triblock copolymers.

In addition, the catalyst composition may further comprise a compound represented by Formula 9 below, and the compound represented by Formula 8 above may serve as a co-catalyst, a scavenger, or both.

[Formula 9] -[Al(Rₐ)-O]ₘ-

In Formula 9 above,
Rₐ is each independently a halogen radical, a hydrocarbyl radical having 1 to 20 carbon atoms, or a hydrocarbyl radical having 1 to 20 carbon atoms substituted with halogen, and
m is an integer of 2 or greater.

A compound represented by Formula 9 above is not particularly limited as long as it is alkylaluminoxane. Preferred examples comprise modified methylaluminoxane (MMAO), methylaluminoxane (MAO), ethylaluminoxane, isobutylaluminoxane, butylaluminoxane, and the like, and a particularly preferred compound may be modified methylaluminoxane (MMAO).

The compound represented by Formula 9 above is a compound in the form of an oligomer generated by the reaction of alkyl aluminum and water, and when the compound is used as a co-catalyst, chain transfer is reduced. Therefore, a high molecular weight copolymer may be prepared, and the generation of homo-polyolefin as a side reaction may also be prevented. Therefore, in the end, a polyolefin-polystyrene-based multi-block copolymer exhibiting excellent physical properties such as high tensile strength may be prepared.

Meanwhile, while the compound represented by Formula 9 above may inhibit chain transfer as described above, if a compound such as alkyl aluminum is used as a co-catalyst, chain transfer occurs a lot, so that the molecular weight of a copolymer is lowered and the generation of homo-polyolefin is increased, which may cause a problem in which the physical properties of a block copolymer are degraded.

As described above, in the present invention, a transition metal compound represented by Formula 1 and a compound represented by Formula 9 are used in combination, so that a multi-block copolymer satisfying the aforementioned conditions may be prepared.

In addition, the transition metal compound represented by Formula 1 above and the compound represented by Formula 9 above may also be used in a form supported in a carrier. As the carrier, silica or alumina may be used, but the carrier is not limited thereto.

In addition, the catalyst composition may further comprise a compound represented by Formula 10 below.

[Formula 10] [L-H]⁺[Z(A)4]⁻ or [L]⁺[Z(A)₄]⁻

In Formula 10 above,
Z is a Group 13 element,
A is each independently an aryl group having 6 to 20 carbon atoms in which one or more hydrogen atoms may be substituted with a substituent, or an alkyl group having 1 to 20 carbon atoms, and
the substituent of A is halogen, hydrocarbyl having 1 to 20 carbon atoms, alkoxy having 1 to 20 carbon atoms, or aryloxy having 6 to 20 carbon atoms.

Step (S1) may be performed, for example, in a uniform solution state. At this time, as a solvent, a hydrocarbon solvent or olefin monomer itself may be used as a medium. The hydrocarbon solvent may be an aliphatic hydrocarbon solvent having 4 to 20 carbon atoms, specifically isobutane, hexane, cyclohexane, methylcyclohexane, and the like. The solvent may be used alone, or in combination of two or more thereof.

The polymerization temperature of Step (S1) may vary depending on reaction materials, reaction conditions, and the like, but may specifically be 70 to 170°C, specifically 80 to 150°C, or 90 to 120°C. Within the above range, the solubility of a polymer may be increased and a catalyst may be thermoplasticly stabilized.

The polymerization of Step (S1) may be performed in a batch, semi-continuous, or continuous manner, and may also be performed in two or more steps having different reaction conditions.

A compound prepared by the above-described Step (S1) may serve as a precursor for preparing the polyolefin-polystyrene-based multi-block copolymer of the present invention by an anionic polymerization reaction of Step (S2) to be described later.

In one example of the present invention, the alpha-olefin-based monomer may be a C5 to C20 alpha-olefin, and specifically, may be a C5 to C14 alpha-olefin.

In one example of the present invention, the alpha-olefin may be one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene, and 3,4-dimethyl-1-hexene, and more specifically, may be 1-hexene.

### Step (S2)

Step (S2) is a step of preparing a multi-block copolymer by reacting an aromatic vinyl-based monomer with the polyolefin-based block in the presence of an anionic polymerization initiator.

In Step (S2), an aromatic vinyl-based monomer is continuously inserted between a zinc-carbon bond of (polyolefinyl)₂Zn comprised in the compound formed by the above-described Step (S1), so that a polystyrene-based chain may be formed, and at the same time, a styrene group derived from a chain extender present at an end of the compound formed by Step (S1) may participate as a copolymerization site with the aromatic vinyl-based monomer to be connected to the polystyrene-based chain. In addition, a multi-block copolymer prepared through the above process may be easily quenched by the reaction of an end group with water, oxygen, or an organic acid, through which the multi-block copolymer is converted into an industrially useful polyolefin-polystyrene-based multi-block copolymer.

The aromatic vinyl-based monomer may be a C6 to C20 aromatic vinyl-based monomer. For example, the aromatic vinyl-based monomer may be an aromatic vinyl-based monomer comprising ethylene substituted with a C6 to C20 aryl group, ethylene substituted with a phenyl group, and the like, specifically styrene, α-methyl styrene, vinyl toluene, alkyl styrene substituted with a C₁₋₃ alkyl group (e.g., o-methyl styrene, m-methyl styrene, p-methyl styrene, p-ethyl styrene, etc.) or styrene substituted with halogen, and more specifically styrene.

In one example of the present invention, the anionic polymerization initiator may be an alkyl lithium compound represented by Formula 11 below.

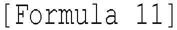

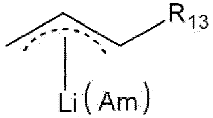

In Formula 11 above,
R₁₃ is hydrogen or a C1 to C20 hydrocarbon, and
Am is an amine-based compound represented by Formula 12 below.

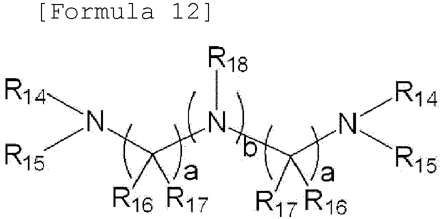

In Formula 12 above,
R₁₄ to R₁₈ are each independently hydrogen or a C1 to C20 hydrocarbon, and
a and b are each independently an integer of 0 to 3, wherein the a and the b are not simultaneously 0.

In one example of the present invention, R₁₃ may be hydrogen, a C1 to C20 alkyl, a C3 to C20 cycloalky, or a substituted or unsubstituted C7 to C20 arylalkyl,
R₁₄ to R₁₈ may each independently be hydrogen, a C1 to C20 alkyl, a C1 to C20 alkenyl, a C3 to C20 cycloalkyl, a substituted or unsubstituted C6 to C20 aryl, or a substituted or unsubstituted C7 to C20 arylalkyl, and
a and b may each independently be an integer of 0 to 2.

In addition, in one example of the present invention, R₁₃ to R₁₈ may each independently be hydrogen or a C1 to C20 alkyl, wherein a may be 1 or 2, and b may be 0 or 1.

Specifically, a may be an integer of 1 to 3, and b may be an integer of 0 to 3, and more specifically, a may be 1 or 2, and b may be an integer of 0 to 2, and even more specifically, a may be 1 or 2, and b may be 0 or 1.

In one example of the present invention, in Formula 11 above, Am may specifically be represented by Formulas 13 or 14 below.

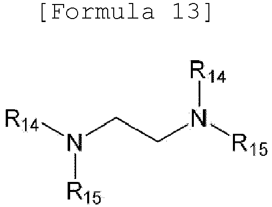

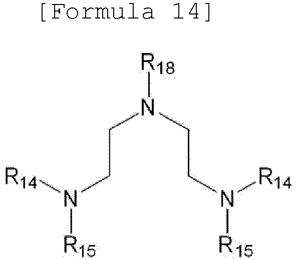

In the above formulas,
R₁₄, R₁₅, and R₁₈ are each independently hydrogen or a C1 to C20 alkyl.

In addition, in one example of the present invention, in Formula 11 above, Am may specifically be represented by Formulas 13a or Formula 14a below.

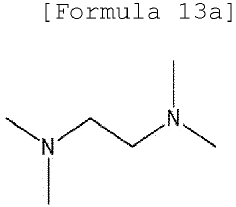

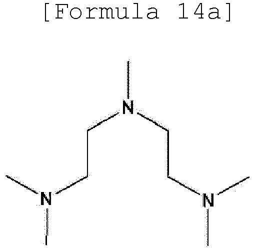

In the method for preparing a multi-block copolymer of the present invention, the compound represented by Formula 11 above is used as an anionic polymerization initiator, so that a polystyrene-based chain may be grown from polyolefin of (polyolephinyl)₂Zn in which a polyolefin-based chain has grown around the organozinc compound, zinc (Zn) in particular, prepared in Step S1. As described above, in the method for preparing a multi-block copolymer of the present invention, a polystyrene-polyolefin-polystyrene multi-block copolymer may be prepared by growing the polystyrene-based chain at both ends of a polyolefin chain, so that the prepared multi-block copolymer may have a structure close to symmetry, and may have a uniform polystyrene domain size.

The anionic polymerization initiator may be prepared by the following preparation method.

A method for preparing the anionic polymerization initiator comprises a process of performing a reaction by introducing a compound represented by Formula 16 below and a compound represented by Formula 12 in the presence of a compound represented by Formula 15 below.

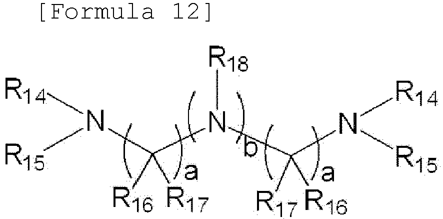

[Formula 15] B-Li

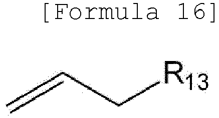

In the above formulas,
R₁₃ to R₁₈ are each independently hydrogen or a C1 to C20 hydrocarbon,
a and b are each independently an integer of 0 to 3, wherein the a and the b are not simultaneously 0, and
B is a C1 to C20 alkyl.

In one example of the present invention, R₁₃ may be hydrogen or a C1 to C20 hydrocarbon, R₁₄ to R₁₈ may each independently be hydrogen, a C1 to C20 alkyl, a C1 to C20 alkenyl, a C3 to C20 cycloalkyl, a substituted or unsubstituted C6 to C20 aryl, or a substituted or unsubstituted C7 to C20 aryl alkyl, and a and b may each independently be an integer of 0 to 2, and B may be a C1 to C12 alkyl.

In addition, in one example of the present invention, R₁₄ to R₁₈ may each independently be hydrogen or a C1 to C20 alkyl, a may be an integer of 1 or 2, b may be an integer of 0 or 1, and B may be a C1 to C8 alkyl.

Specifically, a may be an integer of 1 to 3, and b may be an integer of 0 to 3, and more specifically, a may be 1 or 2, and b may be an integer of 0 to 2, and even more specifically, a may be 1 or 2, and b may be 0 or 1.

An alkyl lithium compound represented by Formula 16 above may be, for example, n-BuLi, wherein n-BuLi is a material widely used as an initiator of anionic polymerization, and is easy to obtain and has excellent unit cost efficiency.

In the method for preparing the anionic polymerization initiator, the process of reacting a compound represented by Formula 16 above with a compound represented by Formula 15 above may be performed first, and thereafter, a compound of Formula 12 may be reacted therewith to prepare a compound of Formula 11 above. Specifically, a compound represented by Formula 16 above is reacted with a compound represented by Formula 15 above to produce allyl lithium is an intermediate, and the allyl lithium is reacted with a compound of Formula 12 to finally form an anionic polymerization initiator of Formula 11 above.

In addition, the process of performing a reaction by introducing a compound represented by Formula 16 above and a compound represented by Formula 12 above in the presence of a compound represented by Formula 15 above may be performed under a condition of no additional solvent. The condition of no additional solvent means that, in the presence of the compound represented by Formula 16 above, there is no separate compound which may be used as a solvent in addition to the compound represented by Formula 15 above and the compound represented by Formula 12 above, or means that, an additional solvent is present in a trace amount, and thus does not significantly react with the compound of Formula 15 above.

When the reaction is performed under condition of no additional solvent, the reaction of the compound represented by Formula 15 and the compound represented by Formula 16 above is performed as a main reaction, so that the anionic polymerization initiator of Formula 11 above may be effectively prepared. When there is a separate solvent, the anionic polymerization initiator of Formula 11 above, a compound produced by reacting the compound represented by Formula 15 above with the compound represented by Formula 12 above, and a compound decomposed from the compound produced by reacting the compound represented by Formula 15 above with the compound represented by Formula 12 above are all mixed and present, and thus it is not effective.

### Preparation method of resin composition

The resin composition of the present invention may be prepared by a preparation method comprising a step of mixing a multi-block copolymer prepared by the method for preparing the multi-block copolymer with polypropylene.

In one example of the method for preparing a resin composition of the present invention, the method for preparing the multi-block copolymer is the same as described above, and the composition of the resin composition is also the same as described above.

The resin composition according to an embodiment of the present invention which satisfies the above-described composition and content conditions may be prepared by adding polypropylene and selectively an inorganic filler to a multi-block copolymer, followed by mixing and performing heat treatment. At this time, the type and the content of the polypropylene are the same as described above.

The mixing process may be performed according to a typical method. Specifically, the mixing may be performed using a super mixer or a ribbon mixer.

In addition, as required in the mixing process, an additive such as an antioxidant, a thermoplastic stabilizer, a UV stabilizer, an antistatic agent, and the like may be further comprised, and in order to improve paintability, an additive having a small amount of adhesive resin or polar group may be selectively further used within an appropriate content range.

In addition, the heat treatment process may be performed at a temperature above the melting point of polypropylene and 210°C or below. The heat treatment process may be performed using various blending processing devices such as a twin-screw extruder, a single-screw extruder, a roll-mill, a kneader, or a banbury mixer.

### Examples

Hereinafter, the present invention will be described in detail with reference to examples. However, the following examples are merely illustrative of the present invention and are not intended to limit the scope of the present invention.

### Reagent and experiment condition

All experiments were performed under an inert atmosphere using a standard glove box and using a Schlenk technique. Toluene, hexane, and tetrahydrofuran (THF) were distilled with benzophenoneketyl and used. Methylcyclohexane (anhydrous grade) used in the polymerization reaction was purchased from Tokyo Chemical Industry (TCI) and purified with a Na/K alloy and used. Sublimation grade HfCl₄ was purchased from Streme and used as is. An ethylene-propylene gas mixture was purified with trioctylaluminum (0.6M in a mineral system) in a beam reactor (2.0 L) and used.

¹H NMR(600 MHz) and ¹³C NMR(150 Mhz) spectra were recorded using an ECZ 600 instrument (JEOL).

GPC data were analyzed in 1,2,4-trichlorobenzene at 160°C using a PL-GPC 220 system equipped with a refractive index detector and two columns (PLarian Mixed-B 7.5 × 300 mm Varian [Polymer Lab]).

### (1) Preparation of transition metal compound

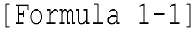

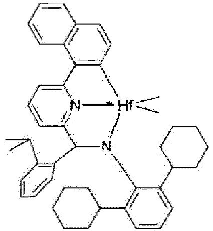

### (i) Preparation of ligand compound

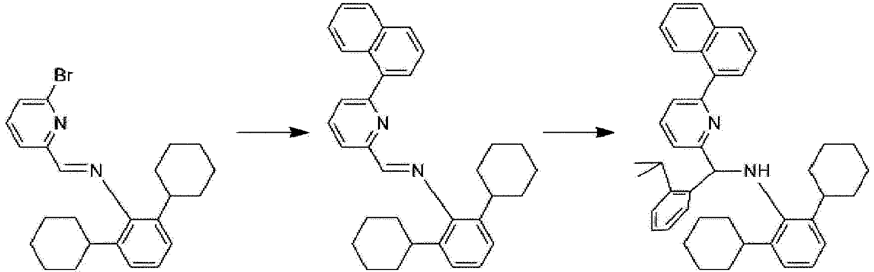

2,6-dicyclohexylaniline (0.772 g, 3.00 mmol) and 6-bromo-2-pyridinecarbox aldehyde (0.558 g, 3.00 mmol) were dissolved in toluene (5 mL) and molecular sieve was added thereto. The mixture was heated to 70°C overnight while being stirred. After the filtration, the solvent was removed from a rotary evaporator. A yellow solid was obtained (1.07 g, 84%).

¹H NMR (C₆D₆): δ 8.41 (s, 1H, NCH), 8.09(d, J = 7.8 Hz, 1H), 7.53(m, 3H), 6.85(d, J = 7.8 Hz, 1H), 6.63(t, J= 7.8 Hz, 1H), 2.74(m, 2H), 1.87(d, J = 12 Hz, 4H), 1.64(d, J = 12.6 Hz, 4H), 1.54(d, J = 10.8 Hz, 2H), 1.39(quartet, J = 10.2 Hz, 4H), 1.11(m, 6H) ppm.

¹³C NMR(C₆D₆): δ 26.55, 27.33, 34.25, 39.30, 119.42, 124.32, 125.21, 129.83, 136.68, 138.82, 142.54, 148.94, 155.95, 162.06 ppm.

HRMS(EI): m/z calcd([M⁺] C₂₄H₂₉BrN₂) 424.1514. Found: 424.1516.

Under nitrogen, the compound (1.07 g, 2.51 mmol), 1-naphthyl boronic acid (0.453 g, 2.64 mmol), Na₂CO₃ (0.700 g, 6.60 mmol), and toluene (5 mL) filled a Schlenk flask. A solution of (Ph₃P)₄Pd(7.83 mg, 0.00678 mmol) was added to degassed H₂O/EtOH(1 mL, *v*/*v*, 1:1) and toluene (1 mL). Light yellow oil was obtained by column chromatography on silica gel using ethyl acetate (*v*/*v*, 90:3:1) containing hexane and a small amount of triethylamine (0.712 g, 60%).

¹H NMR (C₆D₆): δ 8.70 (s, 1H, NCH), 8.41 (d, J = 7.8 Hz, 1H), 8.31(d, J= 7.8 Hz, 1H), 7.68(d, J= 7.2 Hz, 1H), 7.65(d, J= 7.8 Hz, 1H), 7.54(d, J= 7.2 Hz, 1H), 7.27(m, 4H), 7.20(m, 4H), 2.93(m, 2H), 1.90(d, J= 12 Hz, 4H), 1.61(d, J= 13.2 Hz, 4H), 1.50(d, J = 12.6 Hz, 2H), 1.38(m, 4H), 1.11 (m, 6H), ppm.

¹³C NMR(C₆D₆): δ 26.63, 27.38, 34.35, 39.36, 119.21, 124.32, 124.98, 125.50, 126.15, 126.21, 126.64, 126.75, 128.15, 128.73, 129.38, 131.81, 134.52, 136.94, 137.14, 138.52, 149.48, 155.13, 159.79, 164.05 ppm.

HRMS (EI): *m*/*z* calcd([M⁺] C₃₄H₃₆N₂) 472.2878. Found: 472.2878.

2-isopropylphenyllithium (0.114 g, 0.904 mmol) dissolved in diethyl ether (8 mL) was added dropwise to a Schlenk flask containing the compound (0.247 g, 0.523 mmol) in diethyl ether (20 mL). Stirring was performed for 3 hours, and then an aqueous solution (10 mL) of ammonium chloride (0.30 g) was added, and the product was extracted with diethyl ether (3×10 mL). The resulting oil was dried at 60°C overnight at high vacuum. A yellow solid was obtained (0.257 g, 83%).

¹H NMR (C₆D₆): δ 8.24 (m, 1H), 7.90 (m, 1H), 7.64 (m, 1H), 7.62(d, J= 7.8 Hz, 1H), 7.56(d, J= 7.2 Hz, 1H), 7.26(m, 3H), 7.22(m, 4H), 7.11(m, 5H), 5.62(d, J= 5.4 Hz, 1H, NCH), 4.59(d, J = 5.4 Hz, 1H, NH), 3.31(septet, J = 7.2 Hz, 1H,CH), 2.74(m, 2H), 1.79(d, J= 7.8 Hz, 2H), 1.64(m, 4H), 1.54(m, 4H), 1.32(m, 4H), 1.08(m, 2H), 1.03(d, J = 6.6 Hz, 3H, CH₃), 1.00(m, 1H), 0.980(d, J = 6.6 Hz, 3H, CH₃), 0.921(m, 3H) ppm.

¹³C NMR(C₆D₆): δ 23.78, 24.45, 26.63, 27.42, 27.54, 28.96, 34.77, 35.08, 39.01, 67.64, 119.99, 122.89, 124.13, 124.80, 125.36, 125.77, 126.08, 126.46, 126.56, 126.71, 127.58, 128.55, 129.35, 131.84, 134.64, 136.94, 138.77, 141.88, 142.24, 144.97, 146.32, 159.28, 163.74 ppm.

HRMS(EI): *m*/*z* calcd([M⁺] C₄₃H₄₈N₂) 592.3817. Found: 592.3819.

### (ii) Preparation of transition metal compound

To a Schlenk flask was filled with the ligand compound (0.150 g, 0.253 mmol) in toluene (1.5 g), and n-BuLi (0.17 mL, 1.6 M solution in hexane, 0.27 mmol) was added dropwise at room temperature. Stirring was performed for 1 hour, and then HfCl₄(0.0814 g, 0.254 mmol) was added as a solid. The reaction mixture was heated at 100 °C, and stirred for 2 hours. After cooling was performed, MeMgBr (0.29 mL, 3.1 M solution in diethyl ether, 0.89 mmol) was added thereto, and stirred at room temperature overnight. After a volatile material was removed with a vacuum line, the product was extracted with toluene (1.5 g). The extract was obtained through cellite filtration. After the solvent was removed through a vacuum line, the residue was softened in hexane (2 mL) to obtain a yellow solid (0.128 g, 63%).

¹H NMR (C₆D₆): δ 8.58 (d, J = 7.8 Hz, 1H), 8.29(d, J = 8.4 Hz, 1H), 7.79(d, J= 7.8 Hz, 1H), 7.71(d, J= 7.2 Hz, 1H), 7.54(d, J= 7.8 Hz, 1H), 7.46(m, 1H), 7.30(m, 2H), 7.15(m, 3H), 7.09(m, 3H), 6.88(t, J= 7.8 Hz, 1H), 6.62(d, J= 8.4 Hz, 1H), 6.48(s, 1H, NCH), 3.39(m, 1H), 2.92(m, 2H), 2.15(d, J = 13.8 Hz, 1H), 2.10(d, J = 13.8 Hz, 2H), 1.80(m, 2H), 1.65(m, 3H), 1.29(m, 6H), 1.17(d, J= 7.2 Hz, 3H, CH₃), 1.07(m, 3H), 0.99(s, 3H, HfCH₃), 0.95(m, 2H), 0.73(d, J= 7.2 Hz, 3H, CH₃), 0.70(s, 3H, HfCH₃), 0.23(m, 1H) ppm.

¹³C NMR(C₆D₆): δ 23.31, 25.04, 26.63, 26.74, 27.70, 27.76, 27.81, 28.29, 28.89, 35.00, 35.66, 36.62, 37.02, 38.13, 40.88, 62.53, 67.00, 77.27, 119.30, 120.30, 124.29, 125.52, 125.60, 125.97, 126.95, 127.06, 127.73, 129.91, 130.00, 130.09, 130.85, 134.36, 135.80, 140.73, 140.89, 144.02, 145.12, 146.31, 146.38, 146.49, 164.46, 170.79, 206.40 ppm.

Anal. calcd. (C₄₅H₅₂HfN₂): C, 67.61; H, 6.56; N, 3.50%. Found: C, 67.98; H, 6.88; N, 3.19%.

### (2) Preparation of organozinc compound

15.0 g (98.3 mmol) of 4-vinylbenzyl chloride and 2.628 g (108.1 mmol) of a magnesium metal were added to 78 ml of diethyl ether and stirred at 0 °C for 1.0 hour, and then filtered on cellite to remove magnesium added in excess. 19.2 g (81.9 mmol) of p-tosyl-OCH₂CH₂Cl dissolved in 27 ml of diethyl ether was added dropwise to the prepared 4-vinylbenzyl-magnesium chloride (4-vinylbenzyl-MgCl) Grignard reagent. Stirring was performed overnight, and then filtration on cellite was performed to remove magnesium chloride tosylate (MgCl (OTs)), which is an insoluble salt. The filtered filter cake was washed three times with 70 ml of hexane, and the solvent was removed with a rotary evaporator to obtain 14.2 g of a crude product. 43 mg (3,000 ppm) of t-butylcatechol was added as a radical remover, and under full vacuum, vacuum distillation was performed at 85 °C to obtain a compound represented by Formula 8-4-1 below. As a result of measuring the weight of the obtained compound, the yield was obtained at 81 wt%, and ¹H NMR and ¹³C NMR spectra were measured.

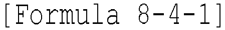

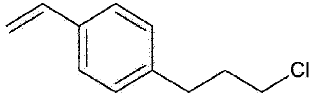

¹H NMR(C₆D₆): δ 7.20 (d, J = 8.4 Hz, 2H), 6.88 (d, J = 8.4 Hz, 2H), 6.61 (dd, J = 16, 9.6 Hz, 1H, =CH), 5.63 (d, J = 16 Hz, 1H, =CH₂), 5.09 (d, J = 9.6 Hz, 1H, =CH₂), 3.04 (t, J = 6.6 Hz, 2H, CH₂), 2.42 (t, J = 6.6 Hz, 2H, CH₂), 1.64 (quintet, J = 6.6 Hz, 2H, CH₂Cl) ppm.

¹³C NMR(C₆D₆): δ 32.61, 34.12, 44.07, 113.13, 126.74, 128.97, 135.99, 137.11, 140.63 ppm.

Thereafter, 10.0 g (55.3 mmol) of the prepared compound (4-(3-chloropropyl)styrene) represented by Formula 8-4-1 above was dissolved in a mixed solvent of 20 ml of toluene and 7.98 g (111 mmol) of tetrahydrofuran (THF), and was added dropwise at room temperature to a suspension in which 2.02 g (83.0 mmol) of magnesium powder was stirred in 40 mL of toluene. After stirring was performed for 5.0 hours, a slight heat was gradually generated, and then the reaction mixture was filtered on celite to remove magnesium added in excess. 6.94 g (55.3 mmol, 1 equivalent to Grignard reagent) of ethyl zinc methoxide produced by reacting 6.83 g (55.3 mmol) of diethyl zinc (Et₂Zn) and 1.78 g (55.3 mmol) of methanol in-situ in 30 ml of toluene at room temperature for 1.0 hour was added to the filtrate. Thereafter, 60 ml of toluene was added thereto, followed by stirring at room temperature for 1.0 hour, and then the solvent was removed using a high vacuum line. Thereafter, 96 g of hexane was added thereto, and magnesium chloridemethoxide (MgCl(OMe)), which is an insoluble salt, was removed on cellite. The filtrate was stored at -30°C to deposit a compound represented by Formula 5-4 as a white crystalline solid. As a result of measuring the weight, the yield was obtained at 56 wt% (7.28 g), and ¹H NMR and ¹³C NMR were measured.

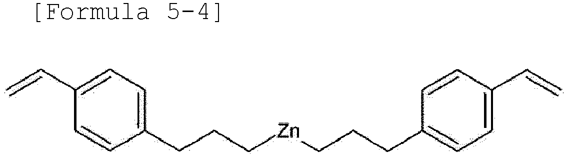

¹H NMR(C₆D₆): δ 7.24 (d, J = 7.8 Hz, 2H), 6.90 (d, J = 7.8 Hz, 2H), 6.64 (dd, J = 17, 11 Hz, 1H, =CH), 5.66 (d, J = 17 Hz, 1H, =CH₂), 5.11 (d, J = 11 Hz, 1H, =CH₂), 2.43 (t, J = 7.2 Hz, 2H, CH₂), 1.80 (quintet, J = 7.2 Hz, 2H, CH₂), -0.19 (t, J = 7.2 Hz, 2H, CH₂Zn) ppm.

¹³C NMR(C₆D₆): δ 12.66, 28.82, 40.09, 113.15, 127.31, 129.23, 136.05, 137.10, 142.91 ppm.

### (3) Preparation of anionic polymerization initiator

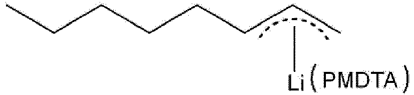

n-BuLi (0.14 mg, 2.2 mmol) was added dropwise to pentamethyldiethylenetriamine (PMDTA, 0.37 g, 2.2 mmol) in 1-octene (13.0 g). Stirring was performed overnight at room temperature, a yellow solution (0.16 mmol-Li/g) of pentylallyl-Li · (PMDTA) was obtained. The aliquot was analyzed by ¹H NMR spectroscopy. ¹H NMR spectrum was recorded, and then a solution of C₆D₆ was quenched with H₂O (or D₂O) and filtered in a pipette with a short pad of anhydrous MgSO4 to record ¹H NMR spectrum again.

### (4) Preparation of multi-block copolymer

### Preparation Example 1

A Parr reactor (3.785 L) was vacuum dried at 120 °C for 2 hours. As a scavenger, a solution of MMAO (0.6 mg, 1,000 µmol-Al) in methylcyclohexane (1,200 g) was introduced into the reactor, and then the mixture was stirred at 120 °C for 1 hour using a heating jacket, and thereafter, the solution was removed using a cannula.

The reactor was filled with methylcyclohexane (1,200 g) containing MMAO (1,000 µmol-Al) as a scavenger, and filled with 1-hexene (560 g) as an alpha-olefin monomer, and then the temperature was set to 90°C. A solution of the organozinc compound (3,720 µmol) of Formula 5-4 above in methylcyclohexane (5 g) was filled as a chain transfer agent, and then a methylcyclohexane solution containing the transition metal compound (12 µmol-Hf) activated with [(C₁₈H₃₇)₂N(H)Me]⁺[B(C₆F₅)₄]⁻ (1.0 eq) in methylcyclohexane was injected. Polymerization was performed within the range of 90 to 120°C for 40 minutes while maintaining the pressure in the reactor at 25 bar by opening a valve of an ethylene tank. After the polymerization, ethylene gas was discharged and then the temperature of the reactor was adjusted to back to 90°C.

When the temperature reached 90°C, pentylallyl-Li · (PMDTA) (3,125 µmol) in methylcyclohexane (10 g) was added. The temperature was maintained at 90°C for 30 minutes during stirring, and then styrene (109 g) was injected. The temperature was adjusted in the range of 90 to 100°C using a heating jacket. The viscosity increased gradually and reached nearly non-visible conditions within 5 hours. An aliquot was taken for analysis by ¹H NMR spectroscopy. From the ¹H NMR analysis of an aliquot, complete conversion of styrene was confirmed. After the complete conversion of styrene, 2-ethylhexanoic acid and ethanol were continuously injected. An obtained polymer mass was dried overnight in a vacuum oven at 80°C.

### Preparation Examples 2 to 4

A multi-block copolymer was prepared in the same manner as in Preparation Example 1 except that the reaction conditions were changed as shown in Table 1 below.

### Comparative Preparation Example 1

G1651, which is an SEBS of Kraton Inc., was set as Comparative Preparation Example 1.

### Comparative Preparation Example 2

A multi-block copolymer was prepared in the same manner as in Preparation Example 1 except that diethyl zinc was used instead of the organozinc compound of Formula 5-4 above in Preparation Example 1.

### Comparative Preparation Example 3

Me₃SiCH₂Li (2,600 µmol, 291.4 mg) and PMDETA (2,600 µmol, 537.3 mg) were mixed with methylcyclohexane (20.7 g) and then stirred at room temperature for 30 minutes to prepare a polymerization initiator.

A multi-block copolymer was prepared in the same manner as in Example 1 except that Me₃SiCH₂Li · (PMDETA) prepared above was used instead of pentylallyl-Li · (PMDTA) as the anionic initiator in Example 1, and that the reaction conditions were changed as shown in Table 1 below.

### Comparative Preparation Example 4

A multi-block copolymer was prepared in the same manner as in Example 1 except that Oc₃Al (1976.7 mg, 1,348 µmol-Al / 25wt% in hexane) was used instead of MMAO as the scavenger in Example 1, and that the reaction conditions were changed as shown in Table 1 below.

### Comparative Preparation Example 5

A transition metal compound, a co-catalyst, and an organozinc compound were prepared according to the preparation of a transition metal compound, preparation of a co-catalyst, and preparation of an organozinc compound described in Korean Patent Publication 2020-0132635, and then a polyolefin-polystyrene-based multi-block copolymer was prepared according to a method described in Example 1 of the Korean Patent Publication 2020-0132635.

**[Table 1]**

| | Catal yst | Scavenger | | Organi c zinc compou nd | Alpha-olefin | | Sty ren e | Polymeriza tion initiator | |
|---|---|---|---|---|---|---|---|---|---|
| | Input amoun t (µmol ) | Type | (µmol ) | (µmol) | Type | Input amoun t (g) | (g) | Type | Inpu t amou nt (µmo l) |
| Preparation Example 1 | 12 | MMAO | 1000 | 3100 | 1-hexe ne | 560 | 104 | Allyl-based | 2600 |
| Preparation Example 2 | 12 | MMAO | 1000 | 3100 | 1-hexe ne | 560 | 104 | Allyl-based | 2600 |
| Preparation Example 3 | 12 | MMAO | 1000 | 3720 | 1-hexe ne | 560 | 109 | Allyl-based | 3125 |
| Preparation Example 4 | 12 | MMAO | 2020 | 3100 | 1-hexe ne | 560 | 104 | Allyl-based | 3410 |
| Comparative Preparation Example 1 | Kraton G1651 | | | | | | | | |
| Comparative Preparation Example 2 | 10 | MMAO | 749 | 3000 | 1-hexe ne | 430 | 100 | Allyl-based | 2600 |
| Comparative Preparation Example 3 | 12 | MMAO | 1000 | 3100 | 1-octe ne | 560 | 98 | Silyl-based | 2600 |
| Comparative Preparation Example 4 | 20 | TOA | 1348 | 2496 | 1-octe ne | 229 | 61 | Allyl-based | 2746 |
| Comparative Preparation Example 5 | 10 | TOA | 238 | 640 | 1-hexe ne | 34 | 12 | Sily-l based | 988 |

### Experimental Example 1

The physical properties of the multi-block copolymer of each of Examples and Comparative Examples were measured as follows.

### (1) Measurement of contents of ethylene, alpha-olefin, and styrene

The measurement was performed through nuclear magnetic resonance (NMR). Using Bruker 600MHz AVANCE III HD NMR device, ¹H NMR was measured under the condition of ns=16, d1=3s, solvent=TCE-d2, and 373K, and then the TCE-d2 solvent peak was calibrated to 6.0 ppm. CH₃ of 1-propylene was confirmed at 1 ppm and a CH₃-related peak (triplet) of a butyl branch by 1-hexene was confirmed near 0.96 ppm to calculate the contents. In addition, the content of styrene was calculated using an aromatic peak near 6.5 to 7.5 ppm.

### (2) Weight average molecular weight (Mw, g/mol) and polydispersity index (PDI)

The weight average molecular weight (Mw, g/mol) and the number average molecular weight (Mn, g/mol) were measured by gel permeation chromatography (GPC), respectively, and the weight average molecular weight was divided by the number average molecular weight to calculate the polydispersity index (PDI).
- Column: PL Olexis
- Solvent: TCB(trichlorobenzene)
- Flow rate: 1.0 ml/min
- Sample concentration: 1.0 mg/ml
- Injection amount: 200 *µ*ℓ
- Column temperature: 160°C
- Detector: Agilent High Temperature RI detector
- Standard: Polystyrene
- Calculate molecular weight by Universal calibration using the Mark-Houwink equation (K = 40.8 × 10⁻⁵, α = 0.7057)

### (3) Measurement of slope of G'-G" plot

A storage modulus G' according to temperatures and a loss modulus G" according to temperatures were obtained by raising the temperature by 5°C per minute from 130°C to 250°C with a frequency of 1 Hz and a strain of 0.5% using a dynamic mechanical analysis (DMA) device, and then the storage modulus G' according to temperatures and the loss modulus G" according to temperatures were respectively plotted as a y-axis and an x-axis.

**[Table 2]**

| | NMR (wt%) | | | GPC | | Slope of G'-G" plot | | | | |
|---|---|---|---|---|---|---|---|---|---|---|
| | Ethy lene | Alph a-olef in | Styr ene | Mw (g/m ol) | PDI | @130 °C | @150 °C | @190 °C | @200 °C | @250 °C |
| Preparation Example 1 | 42.5 | 32.1 | 25.4 | 1802 36 | 1.79 | 2.93 | 3.36 | 3.83 | 3.80 | 3.47 |
| Preparation Example 2 | 43.3 | 31.1 | 25.6 | 1441 88 | 1.67 | 2.84 | 3.27 | 4.45 | 4.47 | 4.28 |
| Preparation Example 3 | 43.6 | 31.9 | 24.5 | 1608 89 | 1.77 | 2.94 | 3.37 | 4.04 | 4.01 | 3.52 |
| Preparation Example 4 | 45.0 | 28.3 | 26.7 | 1455 06 | 1.86 | 2.58 | 2.87 | 3.15 | 3.16 | 3.16 |
| Comparative Preparation Example 1 | 43.4 | 24.8 | 31.8 | 1392 61 | 1.13 | 2.88 | 4.52 | 6.39 | 7.43 | 10.1 4 |
| Comparative Preparation Example 2 | 42.8 | 32.4 | 24.8 | 1130 12 | 1.49 | 1.85 | 1.71 | 1.61 | 1.55 | 1.24 |
| Comparative Preparation Example 3 | 40.2 | 23.1 | 36.7 | 1133 79 | 1.56 | 2.28 | 2.30 | 2.29 | 2.30 | 2.16 |
| Comparative Preparation | 42.3 | 22.7 | 34.9 | 6131 0 | 1.71 | 0.87 | 0.78 | 0.71 | 0.73 | 0.88 |
| Example 4 | | | | | | | | | | |
| Comparative Preparation Example 5 | 49.1 | 25.3 | 25.5 | 9804 2 | 1.87 | 2.55 | 2.63 | 2.93 | 2.90 | 2.49 |

### Preparation of resin composition

### Example 1

To 0.25 parts by weight of the multi-block copolymer prepared in Preparation Example 1 above, 1 parts by weight of highly crystalline polypropylene (CB5230, product of Korea Petrochemical Ind. Co., LTD) having a melt index (230°C, 2.16kg) of 30 g/10 min was added, and then solution blending was performed in xylene using a reactor to prepare a resin composition compound. At the time, the temperature was 200°C to 230°C, the impeller rotation speed was 400 rpm, and the blending time was 4 hours. After the blending was finished, the compound was recovered and then dried overnight in a vacuum oven of 100°C.

### Example 2

A resin composition compound was prepared in the same manner as Example 1 except that the multi-block copolymer prepared in Example 2 was used instead of the multi-block copolymer prepared in Preparation Example 1.

### Example 3

A resin composition compound was prepared in the same manner as Example 1 except that the multi-block copolymer prepared in Example 3 was used instead of the multi-block copolymer prepared in Preparation Example 1.

### Example 4

A resin composition compound was prepared in the same manner as Example 3 except that the content of the multi-block copolymer prepared in Preparation Example 3 and the content of the polypropylene were respectively changed to 0.67 parts by weight and 1 part by weight.

### Example 5

A resin composition compound was prepared in the same manner as Example 1 except that the multi-block copolymer prepared in Example 4 was used instead of the multi-block copolymer prepared in Preparation Example 1.

### Comparative Example 1

A resin composition compound was prepared in the same manner as Example 1 except that the multi-block copolymer prepared in Preparation Comparative Example 1 was used instead of the multi-block copolymer prepared in Preparation Example 1.

### Comparative Example 2

A resin composition compound was prepared in the same manner as Example 1 except that the multi-block copolymer prepared in Preparation Comparative Example 1 was used instead of the multi-block copolymer prepared in Preparation Example 1.

### Comparative Example 3

A resin composition compound was prepared in the same manner as Example 1 except that the multi-block copolymer prepared in Preparation Comparative Example 2 was used instead of the multi-block copolymer prepared in Preparation Example 1.

### Comparative Example 4

A resin composition compound was prepared in the same manner as Example 2 except that the multi-block copolymer prepared in Preparation Comparative Example 3 was used instead of the multi-block copolymer prepared in Preparation Example 1.

### Comparative Example 5

A resin composition compound was prepared in the same manner as Example 1 except that the multi-block copolymer prepared in Preparation Comparative Example 4 was used instead of the multi-block copolymer prepared in Preparation Example 1.

### Experimental Example 2

### Measurement of bright variance - Evaluation of scratch resistance

Using each of the resin compositions of Examples and Comparative Examples, a specimen of 100×100×1 (mm) was produced by a hot press method under the conditions of 200°C and 20 bar. Thereafter, using an Erichsen scratch tester 430P, the initial brightness (Lᵢ) of the specimen was measured. Then, for the specimen, scratches were formed on the surface at an interval of 2 mm with a force of 10 N using an Eriksen scratch tester, and then a brightness (L_{f}) of the specimen on which the scratches are formed was measured, and an amount of change between Lᵢ and L_{f} was calculated.

**[Table 3]**

| | Resin composition | Mixing ratio (PP: Multi-block copolymer) (Weight ratio) | Brightness variation (Scratch resistance properties) (ΔL) |
|---|---|---|---|
| Example 1 | PP/Preparation Example 1 | 1:0.25 | 0.47 |
| Example 2 | PP/Preparation Example 2 | 1:0.25 | 0.36 |
| Example 3 | PP/Preparation | 1:0.25 | 0.20 |
| | Example 3 | | |
| Example 4 | PP/Preparation Example 3 | 1:0.67 | 0.14 |
| Example 5 | PP/Preparation Example 4 | 1:0.25 | 0.48 |
| Comparative Example 1 | PP/ Comparative Preparation Example 1 | 1:0.25 | 0.99 |
| Comparative Example 2 | PP/ Comparative Preparation Example 1 | 1:0.67 | 0.60 |
| Comparative Example 3 | PP/ Comparative Preparation Example 2 | 1:0.25 | 0.57 |
| Comparative Example 4 | PP/ Comparative Preparation Example 3 | 1:0.25 | 0.51 |
| Comparative Example 5 | PP/ Comparative Preparation Example 4 | 1:0.25 | 0.60 |

As can be confirmed from Table 3 above, the resin compositions of Examples 1 to 5 showed a small bright variance compared to the resin compositions of Comparative Examples 1 to 5.

As such, the resin compositions of Examples 1 to 5 according to one example of the present invention had a small brightness variation value which indicates that the brightness variation caused by the scratches formed on the surface is small, so that it was confirmed that the scratch resistance of the surface was significantly excellent.

In addition, when examining Examples 3 and 4 and Comparative Examples 1 and 2, it was confirmed that the larger amount of multi-block copolymers were mixed with respect to the polypropylene, the further decreased the brightness variation of the resin composition. However, typically, as the content of a block copolymer is increased in a resin composition comprising polypropylene and the block copolymer, the flow flowability (flow rate, melt flow rate) of the resin composition decreases, so that the processability is lowered. The resin composition of Example 4 comprised a block copolymer in less than half the ratio of the resin composition of Comparative Example 2, but exhibited a very small brightness variation value, so that it can be confirmed the resin composition of Example 4 has significantly excellent scratch resistance while exhibiting relatively excellent processability.

The resin compositions of Examples 1 to 3 and 5 also comprised a block copolymer in less than half the ratio of the resin composition of Comparative Example 2, but exhibited a very small brightness variation value, and also exhibited a low brightness variation compared to the resin compositions of Comparative Examples 1 to 3 and 5.

From the above results, it can be seen that the resin composition according to one example of the present invention may achieve excellent scratch resistance even with a small content of block copolymers, so that it can be confirmed that the present invention may provide a resin composition exhibiting excellent scratch resistance while maintaining flow flowability. In addition, when the resin composition according to one example of the present invention comprises a relatively large amount of block copolymers, the resin composition may exhibit further excellent scratch resistance, so that it has been confirmed that the amount of the resin composition may be properly adjusted according to required scratch resistance.

## Claims

1. A thermoplastic resin composition which is a resin composition comprising polypropylene and a multi-block copolymer, wherein:
the multi-block copolymer comprises a polystyrene-based block comprising an aromatic vinyl-based monomer-derived repeating unit and a polyolefin-based block comprising an ethylene-derived repeating unit and an alpha-olefin-derived monomer-derived repeating unit; and
the multi-block copolymer satisfying the following conditions when a storage modulus G' according to a temperature and a loss modulus G" according to a temperature measured by a dynamic mechanical analysis method are plotted as a Y-axis and an X-axis, respectively:
a) a slope at 130°C is 2.00 to 4.00, and
B) a slope at 190°C is 3.00 to 5.00.

2. The thermoplastic resin composition of claim 1, wherein the polypropylene and the multi-block copolymer are comprised at a weight ratio of 1:0.11 to 1:9.

3. The thermoplastic resin composition of claim 1, wherein
a brightness variation is 0.10 to 0.99, and the brightness variation is derived as follows using an Erichsen scratch tester:
a) preparing a specimen of 100 × 100 × 1 (mm) of the resin composition by a hot press method;
b) measuring an initial brightness (Lᵢ) of the specimen;
c) forming scratches on the surface of the specimen at an interval of 2 mm with a force of 10 N;
d) measuring a brightness (L_{f}) of the specimen on which the scratches are formed; and
e) calculating an amount of change between Lᵢ and L_{f}.

4. The thermoplastic resin composition of claim 3, wherein the brightness variation is 0.10 to 0.50.

5. The thermoplastic resin composition of claim 1, wherein the alpha-olefin is one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene, and 3,4-dimethyl-1-hexene.

6. The thermoplastic resin composition of claim 1, wherein the multi-block copolymer further satisfies the condition in which the difference between the slope at 130°C and the slope at 190°C is 0.50 to 2.00.

7. The thermoplastic resin composition of claim 6, wherein the multi-block copolymer has the slope at 130°C which is less than the slope at 190°C.

8. The thermoplastic resin composition of claim 1, wherein the multi-block copolymer further satisfies a slope in the range of 2.00 to 5.00 in the range of 130°C to 250°C.

9. The thermoplastic resin composition of claim 1, wherein the multi-block copolymer further satisfies the condition in which the slope at 250°C is 3.00 to 4.80.

10. The thermoplastic resin composition of claim 1, wherein the multi-block copolymer has a molecular weight distribution of 1.5 to 3.0 as measured from gel permeation chromatography (GPC).
